# EUROPÄISCHE PATENTSCHRIFT

(11) **EP 0 879 552 B1**
(45) Veröffentlichungstag und Bekanntmachung des Hinweises auf die Patenterteilung: **11.07.2001**
(21) Anmeldenummer: 98108221.7
(22) Anmeldetag: 06.05.1998
(51) Int. Cl.: A01B 33/10

(54) **Kreiselegge**
Rotary harrow
Herse rotative

(30) Priorität: 24.05.1997 DE 29709134 U
(43) Veröffentlichungstag der Anmeldung: 25.11.1998
(73) Patentinhaber: NIEMEYER Landmaschinen GmbH, 48477 Hörstel-Riesenbeck (DE)
(72) Erfinder: Laumann, Bernhard, 48477 Hörstel-Riesenbeck (DE); Börgermann, Rainer, 48477 Hörstel-Riesenbeck (DE)

(56) Entgegenhaltungen:
- DE-A- 2 058 482
- DE-C- 306 043
- GB-A- 989 461
- NL-A- 7 208 616

## Beschreibung

Die Erfindung betrifft eine Kreiselegge in der Ausbildung nach dem Oberbegriff des Anspruchs 1.

In der DE-GM 72 44 574 wird eine Bodenbearbeitungsmaschine beschrieben mit mehreren nebeneinander angeordneten, zwangsläufig gegensinnig angetriebenen Werkzeugkreiseln. Die Bodenbearbeitungswerkzeuge, ausgebildet als Bodenbearbeitungszinken, sind in ihrer Art untereinander gleich und ihre Vorderkanten sind schneidenförmig abgeschrägt. Die in dieser Schrift dargestellten und beschriebenen Bodenbearbeitungszinken sind im wesentlichen und in ihrer Geometrie als Flachzinken und damit als Messerzinken beschrieben.

Bei einer weiteren bekannten Kreiselegge nach der DE 35 00 273 C2 sind jedem Werkzeugkreisel um eine vertikal angeordnete Drehachse ebenfalls zwei Bodenbearbeitungszinken der selben Art zugeordnet. Es werden dort Bodenbearbeitungszinken beschrieben, die an ihrer, der Drehachse des Werkzeugskreisels zugewandten Seite, konkav gewölbt sind. Durch die gewölbte Form der Arbeitsteile des Zinkens soll die Gefahr des Zuschmierens von feinen Bodenkanälen verringert werden.

Aufgabe der Erfindung ist es, die Bodenbearbeitungswerkzeuge einer Kreiselegge so zu gestalten und anzuordnen, daß die vorteilhaften Wirkungen von schneidenden und krümelnden Bodenbearbeitungszinken in einem Werkzeugkreisel vereinigt sind.

Die Aufgabe der Erfindung wird mit den kennzeichnenden Merkmalen des Anspruchs 1 gelöst. Bezüglich weiterer wesentlicher Vorteile wird auf die Unteransprüche hingewiesen.

Die mit der Erfindung erzielten Vorteile bestehen insbesondere darin, die Wirkungsweisen unterschiedlich ausgestalteter Bodenbearbeitungszinken, durch Art der Anordnung und Positionierung innerhalb eines Werkzeugkreisels gleichzeitig zum Einsatz bringen zu können, um damit wechselnden Bodenverhältnissen, die z.B. durch verschiedenartig zusammengesetzten Böden, wechselnder Bodenfeuchte, unterschiedlicher Bodenverdichtung, besser gerecht zu werden zu können. Das Ziel der Bodenbearbeitung ist die Herbeiführung der Bodengare zu unterstützen und deshalb eine möglichst feinkrümelige und gleichmäßige Bodenkrume zu erzeugen. Schneidenden Werkzeugen haftet der Nachteil an, daß sie eventuell einen Schmiereffekt erzeugen, der in der Bodenbearbeitung unerwünscht ist. Mit der Kombination verschiedenartiger Bodenbearbeitungszinken wird dieser Nachteil minimiert.

Alle Bodenbearbeitungszinken bewegen sich während des Arbeitsprozesses auf einer Zykloidenbahn, deren Verlauf durch Fahrtrichtung, Fahrgeschwindigkeit, Wirkungsradius, Drehzahl und Drehrichtung des jeweiligen Werkzeugkreisels, vorgegeben wird. Flachzinken, vorwiegend ausgebildet als schneidende Messerzinken, verursachen vergleichsweise geringere Schnittdruckkräfte und minimieren damit das erforderliche Drehmoment an der Zapfwelle des Traktors. Von Messerzinken geht primär eine schneidende Wirkung aus, welche die Bodenkrume aufreißt und organische Massen zerkleinert.

Demgegenüber geht von Stabzinken mit breiteren Querschnitten, beispielsweise ausgebildet als Vierkantzinken, eine größere, verdrängendere Wirkung aus. Die damit gekoppelten Verlagerungen der Bodenkrume erzeugen größere Druck-Scher- und Reibungskräfte als beispielsweise flache Messerzinken. Insbesondere die erhöhten Druckkräfte in Verbindung mit den Scherkräften bewirken eine bessere Zerkleinerung der Erdschollen, so daß von diesen Bodenbearbeitungszinken eher eine krümelnde Wirkung ausgeht. Durch die Kombination von Schneid- und Krümelzinken in einem Werkzeugkreisel lassen sich die Vorteile der jeweiligen Bodenbearbeitungszinken wirksam zusammenführen. Damit sind z.B. bessere Krümel- und Mischeffekte erzielbar. Dieses wirkt sich besonders vorteilhaft beim Zerkleinern von organischen Massen und dem Vermischen dieser mit scholliger Bodenkrume aus.

Ein weiterer Vorteil durch diese Kombination von Messer- und Krümelzinken, letzterer ausgebildet mit einem breiteren Verdrängungsquerschnitt, ergibt sich durch den größeren Wirbeleffekt, der die Durchlüftung des Bodens und damit den Sauerstoffeintrag verbessert.

Paarweise gegenüberliegend angeordnete Messerzinken an einem Werkzeugkreisel bieten zwischen diesen Zinken größere Angriffsflächen zum Ankleben von Bodenresten. Dieses fördert insbesondere bei feuchten und bindigen Böden die Bildung von Brücken zwischen den Bodenbearbeitungswerkzeugen wodurch die Verstopfungswahrscheinlichkeit zunimmt. Diese wird durch die Kombination von Messer- und Krümelzinken erheblich gesenkt, da die Adhäsionskräfte auf der Krümelzinkenseite durch die geringere Angriffsfläche und die unsymmetrische Ausbildung des Werkzeugkreisels insgesamt reduziert wird. Dadurch bleibt der Raum zwischen den Bodenbearbeitungszinken frei, welches die Störanfälligkeit durch Verstopfung reduziert und damit eine schnellere Fahrweise ermöglicht. Dieses kann zu größerer Leistungsfähigkeit und damit zu größer Wirtschaftlichkeit der Kreiselegge beitragen.

In einem weiteren Ausführungsbeispiel werden die Bodenbearbeitungszinken auf unterschiedlichen Arbeitsradien angeordnet. So ist es beispielsweise von Vorteil, je nach Bodenart dem schneidenden Zinken einen größeren Arbeitsradius zuzuordnen, so daß der krümelnde Zinken in bereits aufgebrochener Bodenkrume arbeiten kann. Dieses wirkt sich insbesondere auf schweren Böden in vorteilhafter Weise auf den Energiebedarf des Traktors aus, da hiermit das erforderliche Drehmoment an der Zapfwelle das Traktors reduziert werden kann und damit auch der Zugkraftbedarf des Traktors insgesamt reduziert werden kann.

Weitere Merkmale und Vorteile der Erfindung ergeben sich aus der nachfolgenden Beschreibung und den Zeichnungen, in denen einige Ausführungsbeispiele der Kreiselegge gemäß der Erfindung schematisch, angenähert maßstäblich dargestellt sind. Es zeigen:
- Fig. 1 -: Die Vorderansicht einer Kreiselegge entgegen der Fahrtrichtung.
- Fig. 2 -: Die Draufsicht einer Kreiselegge.
- Fig. 3 -: - Einen Querschnitt durch mehrere Werkzeugkreisel gemäß Schnitt B-B in Fig. 1.
- Fig. 4 -: Einen Schnitt durch eine Werkzeugkreisellagerung gemäß Schnitt A-A in Fig. 1.
- Fig. 5 -: Einen Schnitt durch den Werkzeugkreisel gemäß Schnitt C-C in Fig. 4.
- Fig. 6 -: Einen Schnitt durch eine Werkzeugkreisellagerung gemäß Schnitt A-A in Fig. 1, weiteres Ausführungsbeispiel.
- Fig. 7 -: Einen Schnitt durch den Werkzeugkreisel gemäß Schnitt D-D in Fig. 6.

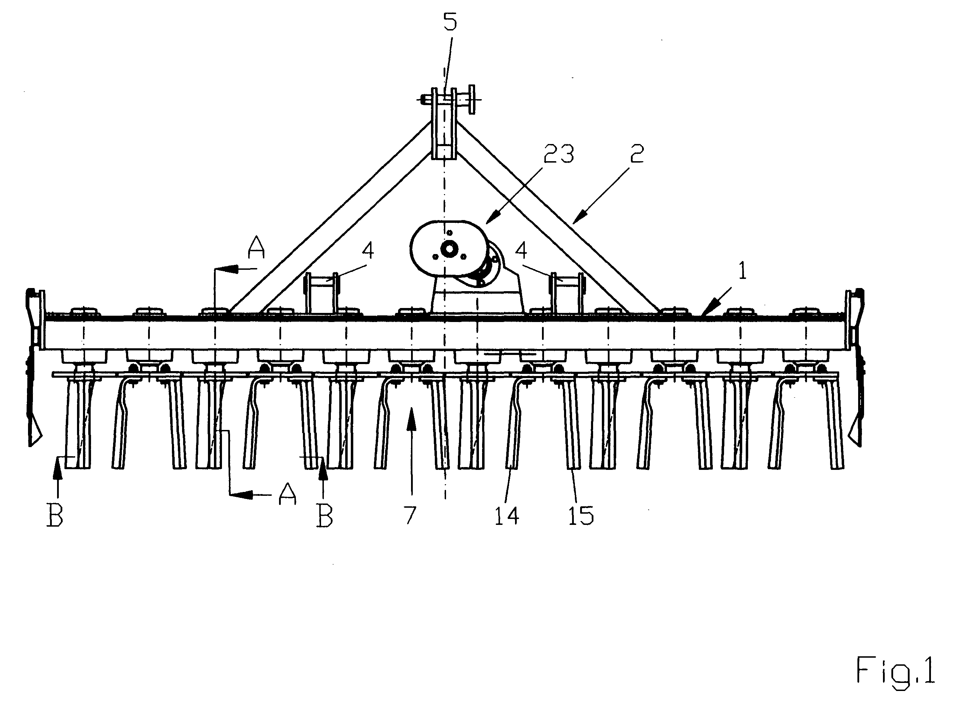

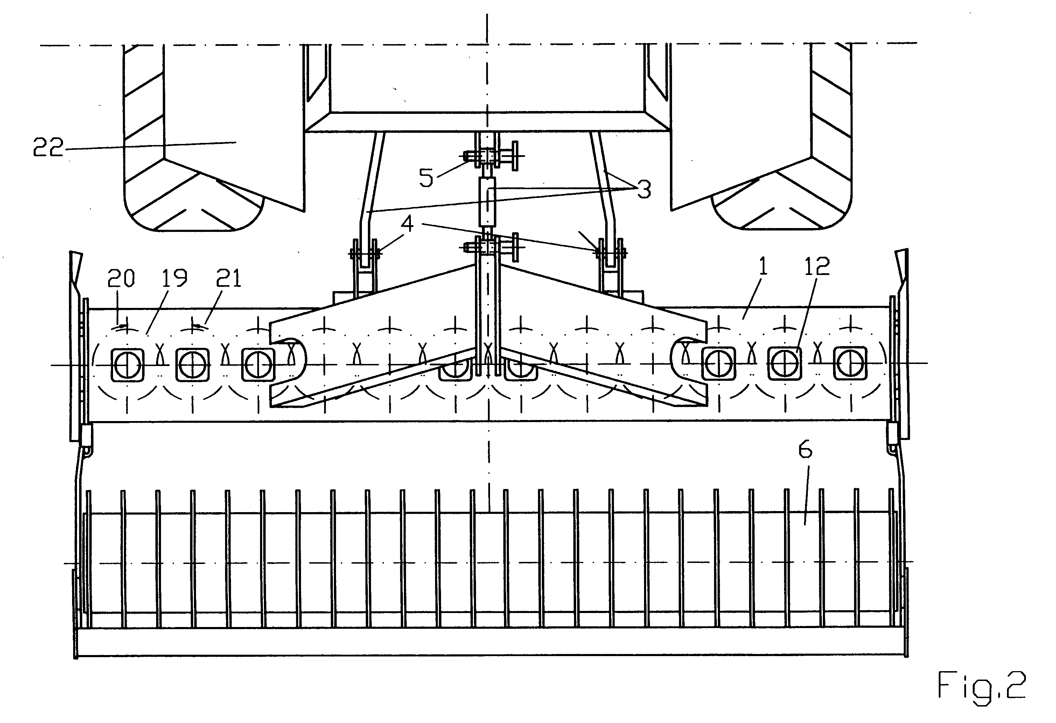

Die als Ausführungsbeispiel dargestellte Kreiselegge in Fig. 1 und Fig. 2 wird vorzugsweise über zwei Unterlenkerbolzen (4) und einen Oberlenkerbolzen (5) mit dem Dreipunktgestänge (3) des Traktors (22) verbunden. Sie besteht im wesentlichen aus einem Trägergehäuse (1), in dem nebeneinander mehrere Werkzeugkreisel (7) gelagert sind, einem Anbaubock (2) mit den Anschlüssen für das Dreipunktgestänge (3) und einer Walze (6), mit der die Arbeitstiefe der Kreiselegge eingestellt wird. Die Werkzeugkreisel (7) werden von der nicht dargestellten Zapfwelle des Traktors über ein Übersetzungsgetriebe (23) angetrieben. Die Bodenbearbeitungszinken bewegen sich auf einem Arbeitskreis (19) relativ zum Trägergehäuse (1).

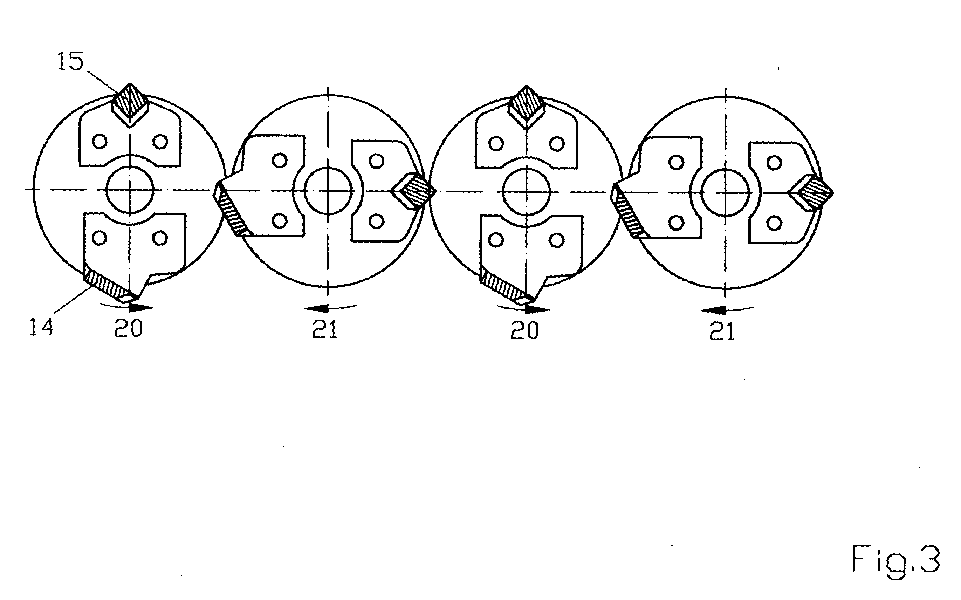

Fig. 3 zeigt den Horizontalschnitt B-B in Fig.1. In dieser Figur sind die gegenläufigen Drehrichtungen (20;21) der benachbarten Werkzeugkreisel (7) und die verschieden geformten Querschnitte der Bodenbearbeitungszinken (14,15) in der Schnittebene B-B dargestellt.

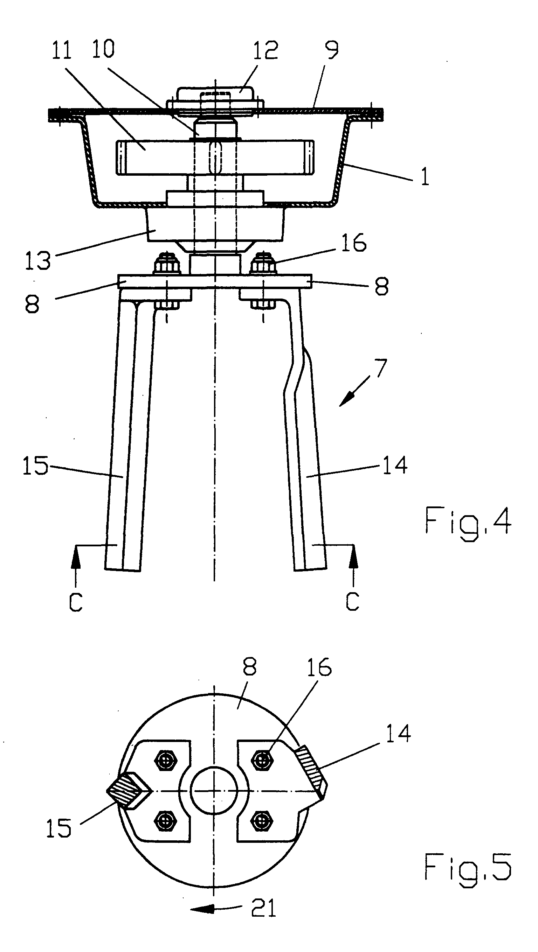

Fig. 4 zeigt den Schnitt A-A durch den Werkzeugkreisel (7). Die Werkzeugkreisel (7) sind in ihrem Trägergehäuse (1) mit lösbarem Deckel (9) gelagert. Jeder Werkzeugkreisel (7) hat eine Antriebswelle (10), die drehfest mit einem Zahnrad (11) verbunden ist. Das Zahnrad (11) greift mit seinen Zähnen formschlüssig in das gegenüberliegende nicht weiter dargestellte Zahnrad des benachbarten Werkzeugkreisels ein, so daß für die einzelnen Werkzeugkreisel (7) eine gegenläufige Drehrichtung (20,21) entsteht. Die Antriebswelle (10) ist über ein oberes Lager (12) am Deckel (9) und das untere Lager (13) im Boden des Trägergehäuses (1) abgestützt. Am unteren Ende der Antriebswelle (10) befindet sich ein Werkzeugträger (8) der drehfest mit der Antriebswelle (10) verbunden ist. Am Werkzeugträger (8) sind nach der Erfindung vorzugsweise zwei Zinken (14;15) oder alternativ (17;18) lösbar, beispielsweise durch Verbindungsschrauben (16), befestigt. Der Werkzeugträger (8) stellt die drehfeste Verbindung zwischen den Bodenbearbeitungszinken (14,15) bzw. (17,18) und der Antriebswelle (10) her. Die Bodenbearbeitungszinken (14,15) in Fig. 4 sind ausgebildet zum einen als geschränkter Messerzinken (14) und zum anderen als geradem Krümelzinken (15) mit Vierkantquerschnitt, deren Wirkungslinien relativ zum Trägergehäuse (1) Arbeitskreisen (19) mit näherungsweise gleich großen Durchmessern beschreiben.

In Fig. 5 ist der Schnitt C-C in Fig. 4 dargestellt. Er zeigt die unterschiedlichen Querschnitte der Bodenbearbeitungszinken in der Schnittebene im Bereich des Bodeneingriffs.

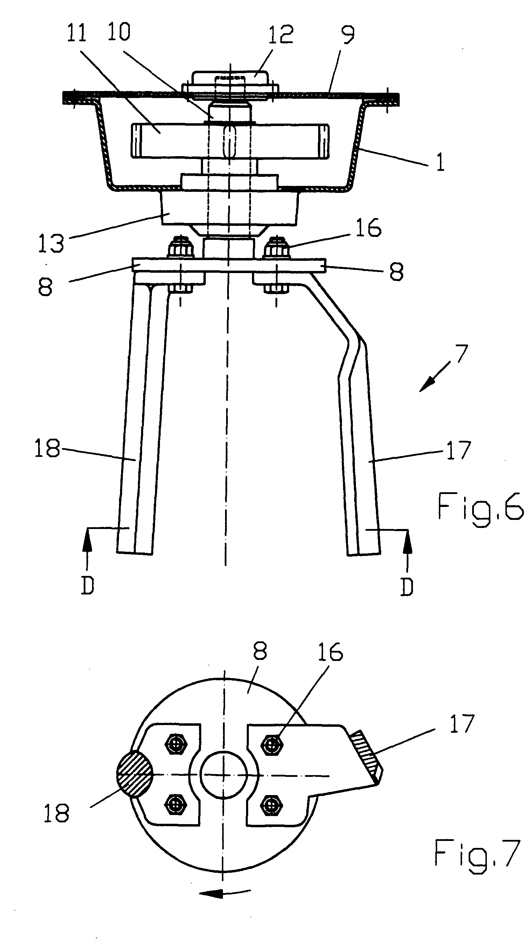

Die Bodenbearbeitungszinken in Fig. 6 sind ausgebildet als geschränkter und gekröpfter Messerzinken (17) und geradem Krümelzinken (18), dessen Querschnitt die strömungstechnisch günstigere Form einer Ellipse aufweist.

In Fig. 7 ist der Schnitt D-D in Fig. 6 dargestellt. Er zeigt die unterschiedlichen Querschnitte der Bodenbearbeitungszinken in der Schnittebene im Bereich des Bodeneingriffs.

## Patentansprüche

1. Kreiselegge, mit mehreren nebeneinander um etwa vertikale Achsen drehbar gelagerte, zwangsläufig gegensinnig angetriebene Werkzeugkreiseln (7) die jeweils mit zwei Bodenbearbeitungszinken (14, 15) bestückt sind, und deren Arbeitskreise (19) einander gegenseitig überlappen, **dadurch gekennzeichnet,** daß jeder Werkzeugkreisel (7) zwei unterschiedliche und gegenüberliegend angeordnete Bodenbearbeitungszinken aufweist, wobei ein Bodenbearbeitungszinken in an sich bekannter Weise als Messerzinken (14;17) und der andere Bodenbearbeitungszinken als gerade stabförmige Krümelzinken (15,18) mit im Wesentlichen bodenverdrängenden Eigenschaften ausgebildet ist.

2. Kreiselegge nach Anspruch 1 **dadurch gekennzeichnet,** daß der Messerzinken (14) als geschränkter Messerzinken (14) ausgebildet ist.

3. Kreiselegge nach Anspruch 1 **dadurch gekennzeichnet,** daß der Messerzinken (17) in an sich bekannter Weise als geschränkter und verkröpfter Messerzinken (17) ausgebildet ist.

4. Kreiselegge nach Anspruch 1 **dadurch gekennzeichnet**, daß der Krümelzinken (15;18) als Stabzinken ausgebildet ist, welcher einen Querschnitt im Wesentlichen in Form eines Vierkants aufweist, wobei die Diagonale überwiegend in Umfangsrichtung des Arbeitskreises (19) des Krümelzinkens (15) ausgerichtet ist .

5. Kreiselegge nach Anspruch 1 **dadurch gekennzeichnet,** daß der Krümelzinken (15;18) als gerader Stabzinken ausgebildet ist, welcher einen Querschnitt in Form einer Ellipse aufweist, wobei die größere Ellipsenachse überwiegend in Umfangsrichtung des Arbeitskreises (19) des Krümelzinkens (18) ausgerichtet ist.

6. Kreiselegge nach Anspruch 1 **dadurch gekennzeichnet,** daß die Arbeitskreise (19) von Messerzinken (14;17) und Krümelzinken (15,18) eines Werkzeugkreisels (7) im Bereich des Bodeneingriffs unterschiedlich große Durchmesser aufweisen.

7. Kreiselegge nach Anspruch 1 **dadurch gekennzeichnet,** daß die Arbeitskreise (19) beider Bodenbearbeitungszinken (14,15);(14,18) eines Werkzeugkreisels (7) im Bereich des Bodeneingriffs unterschiedlich große Durchmesser aufweisen.

8. Kreiselegge nach Anspruch 1 in Verbindung mit einem oder mehreren Ansprüchen 2 bis 7 **dadurch gekennzeichnet,** daß zumindest die Arbeitskreise (19) der jeweils äußeren Messerzinken (17) benachbarter Werkzeugkreisel (7) sich teilweise überdecken.

## Claims

1. Rotary harrow with several circular tools (7) arranged next to each other and running in rotary bearings around mainly vertical axes, necessarily driven in an opposite direction in relation to each other, each equipped with two soil cultivation (tilling) tines (14,15) and whose operating circles (19) overlap each other, characterised in that each circular tool (7) has two different soil cultivation (tilling) tines arranged opposite each other, one soil cultivation (tilling) tine is shaped in a known manner as a knife tine (14;17) and the other soil cultivation (tilling) tine as a straight, rod-shaped clod crushing tine (15,18) having mainly soil displacing properties.

2. Rotary harrow according to claim 1, characterised in that the knife tine (14) is designed as a set knife tine (14).

3. Rotary harrow according to claim 1, characterised in that the knife tine (17) is designed in the known manner as a set and bent knife tine (17).

4. Rotary harrow according to claim 1, characterised in that the clod crushing tine (15;18) is designed as a rod-shaped tine, having a cross section mainly in form of a square, the diagonal predominantly extending in circumferential direction of the operating circle (19) of the clod crushing tine (15).

5. Rotary harrow according to claim 1, characterised in that the clod crushing tine (15;18) is designed as a rod-shaped tine, having a cross section mainly in form of an ellipse, the larger ellipse axis being mainly aligned in the circumferential direction of the operating circle (19) of the clod crushing tine (18).

6. Rotary harrow according to claim 1, characterised in that the operating circles (19) of the knife tines (14;17) and clod crushing tines (15,18) of the circular tool (7) have differently sized diameters in the area of soil contact.

7. Rotary harrow according to claim 1, characterised in that the operating circles (19) of both soil working tines (14,15);14,18) of a circular tool (7) have differently sized diameters in the area of soil contact.

8. Rotary harrow according to claim 1 in conjunction with one or several claims 2 to 7, characterised in that at least the working circles (19) of the outer knife tines (17) of neighbouring circular tools (7) partly overlap.

## Revendications

1. Herse rotative comportant plusieurs rotors (7) à outil entraînés de force en sens opposé et montés à rotation autour d'axes sensiblement verticaux, les rotors étant garnis chaque fois de deux dents (14, 15) pour le travail du sol et dont les cercles de travail (19) se chevauchent légèrement, caractérisée en ce que chaque rotor à outil (7) comporte deux dents différentes et installées de manière opposée pour le travail du sol, une des dents est de façon connue en soi une dent en forme de couteau (14, 17) et l'autre dent pour le travail du sol est une dent brise-motte en forme de tige droite (15, 18) avec des caractéristiques assurant pour l'essentiel le refoulement du sol.

2. Herse rotative selon la revendication 1, caractérisée en ce que les dents (14) sont des dents de couteau (14) contournées.

3. Herse rotative selon la revendication 1, caractérisée en ce que les dents à couteau (17) sont réalisées de façon connue en soi sous la forme de dents (17) contournées et coudées.

4. Herse rotative selon la revendication 1, caractérisée en ce que les dents brise-motte (15, 18) sont des dents en forme de tige ayant une section essentiellement en forme de quadrangle, la diagonale étant alignée principalement dans la direction périphérique du cercle actif (19) décrit par les dents brise-motte (15).

5. Herse rotative selon la revendication 1, caractérisée en ce que les dents brise-motte (15, 18) sont des dents droites en forme de tige ayant une section en forme d'ellipse, le plus grand axe de l'ellipse étant aligné principalement dans la direction périphérique du cercle actif (19) des dents brise-motte (18).

6. Herse rotative selon la revendication 1, caractérisée en ce que les cercles actifs (19) des dents en forme de couteau (14, 17) et des dents brise-motte (15, 18) d'un rotor (7) ont des diamètres différents dans leur zone de pénétration dans le sol.

7. Herse rotative selon la revendication 1, caractérisée en ce que les cercles actifs (19) des deux dents (14, 15 ; 14, 18) pour le travail du sol ont un diamètre différent dans leur zone de pénétration dans le sol.

8. Herse rotative selon la revendication 1, en liaison avec l'une ou plusieurs des revendications 2 à 7, caractérisée en ce qu'au moins les cercles actifs (19) des dents à couteau (17) chaque fois extérieures des rotors voisins (17) se chevauchent en partie.
